# EUROPEAN PATENT SPECIFICATION

(11) **EP 2 785 014 B1**
(45) Date of publication and mention of the grant of the patent: **24.07.2019**
(21) Application number: 13161714.4
(22) Date of filing: 28.03.2013
(51) Int. Cl.: H04L 29/08

(54) **Device and method for organizing forwarding information in nodes of a content centric networking**
Vorrichtung und Verfahren zur Organisation der Weiterleitung von Informationen in Knoten eines inhaltszentrierten Netzwerkbetriebs
Dispositif et procédé pour organiser des informations de transmission contenues dans des n'uds d'un réseau central

(43) Date of publication of application: 01.10.2014
(73) Proprietor: Alcatel Lucent, 91620 Nozay (FR); Institut Mines-Télécom, 75634 Paris Cedex 13 (FR)
(72) Inventor: Perino, Diego, 91620 Nozay (FR); Carofiglio, Giovanna, 91620 Nozay (FR); Chiocchetti, Raffaele, 75013 Paris (FR); Rossi, Dario, 75015 Paris (FR); Rossini, Giuseppe, 75011 Paris (FR)
(74) Representative: Camus, Olivier Jean-Claude

(56) References cited:
- EP-A1- 2 323 346
- EP-A1- 2 466 857
- EP-A2- 2 552 083

## Description

### Technical field

The present invention relates to architectural design of content centric networking (or CCN).

### Background of the invention

Content Centric Networking (CCN) introduces a new networking paradigm, where the communication is centred on named-data rather than host address. Indeed, in CCN every content item is identified, addressed and retrieved by its name instead of its physical location defined by its address.

More precisely, in CCN a content item is split in a sequence of chunks uniquely identified by a hierarchical name of B components (e.g. /bell_labs/video/talks.avi/chunk1)) amongst which B-1 components define the full content item name (e.g. /bell_labs/video/talks.avi/)) and one component defines the chunk name (e.g. chunk1)). Content servers announce the set of name prefixes (e.g. /bell_labs/video/ or /bell_labs/ or else only "/" (default gateway)) of content items they can serve by means of routing protocols (i.e. prefixes of permanently stored content items). Network nodes receiving these announcements build their forwarding tables (or FIBs) accordingly. Chunks are then requested by the receiver through interest packets that are forwarded by network nodes towards content servers storing permanent replicas of the requested chunks. Interest packets leave a trail of "bread crumbs" that a matching chunk will follow to reach back the original requester. A matching chunk can be found in every node caching a temporary content replica or at the content server where the permanent content replica is stored.

When an interest packet is received by a CCN node, it checks for content availability in its content store (or CS). If this content is available, the CS sends the requested data back on the incoming interface. Otherwise, the CCN node checks in a pending interest table (or PIT) whether this content has been already requested upward. If an entry is found in the PIT, it is updated in order to track that the incoming interface is waiting for this content. If no PIT entry is found, a new entry is created and the interest packet is forwarded to one or multiple interfaces determined via longest prefix match on the content name prefixes stored in the FIB. It is important to note that a CCN node can also probe interfaces not specified in the FIB in order to discover other available routes.

When a data packet is received by a CCN node, it checks for pending requests in its PIT. If a pending request is found, the data packet is stored in its CS and forwarded towards all requesting interfaces, as listed in the PIT. If no matching PIT entry is found, the data packet is discarded. Moreover, when a data packet is received, the CCN node updates information about the quality (for instance RTT and number of hops) of the interface from which the data packet has been received.

Every content item being identified, addressed and retrieved by its name, each CCN node must potentially store the content data it forwards to serve future requests for the same content. So, it has been proposed to equip network nodes with enhanced storage capabilities to maintain temporary content replicas spread through the network for a period of time ranging from minutes to hours or days.

The availability of different content replicas depends on one or several factors, like content popularity or cache replacement policies, and is clearly impacted by the request forwarding policy. An ideal name-based routing protocol would have to address all temporary replicas of every content item in order to forward user requests towards the "best" available replica (e.g. the closest). But, this appears to be clearly unfeasible in CCN for different reasons. A first reason is the network scale, as the paradigm applies to content of different applications and is not intended to be confined to small controlled network regions. A second reason is the time scale, as temporary replicas stored in CCN nodes are highly volatile and the signalling overhead involved by frequent route updates would be excessive. A third reason is the forwarding table (or FIB) size that is already a matter of concern even considering only permanent content replicas rather than network-cached temporary replicas.

A solution has been proposed by the CCNx open source project to deal with the FIB size. It consists in storing for every entry in a FIB, a list of interfaces ranked according to the forwarding policies. Additional metrics, such as RTT or status, may be also stored per every interface, and quality metrics for every interface are updated upon reception of a data packet.

This solution has at least two drawbacks. Indeed, it stores interface information per every prefix and not per content object. So, a prefix is used to forward request for different content items having different popularities, and therefore content items with different popularities have different availabilities across the network and then quality metric collected for a given content item cannot be exploited for other content items. Moreover, the size of the FIB is already an issue, even if only one next hop interface (without quality metric) is stored for every prefix, because a FIB in a CCN node will have probably to store hundreds of millions of prefixes plus next hop information. If, in addition to next hop information, it is necessary to store quality information related to every interface, the size of the FIB will largely grow. More, quality information collected during chunk retrieval appears to be useful only for a limited period of time, and it is therefore not necessary to store information for prefixes that are not currently requested or have not been recently requested. Document EP2323346 represents relevant prior art.

### Summary of the invention

The invention is defined by the claims. So the invention aims notably at overcoming at least one of the above mentioned drawbacks by proposing a CCN architectural design allowing to support dynamic or adaptive forwarding protocols in CCN nodes.

To this effect the invention notably provides a device, intended for organizing forwarding information into a node of a content centric networking comprising servers storing permanent replicas of content items associated to name prefixes, and comprising a building means arranged for building into this node:
- a forwarding information data structure comprising for each name prefix a list of interfaces where a received packet of a content request can be forwarded towards servers, and
- a temporary forwarding information data structure comprising chosen detailed forwarding information associated to each full content item name of a currently requested content item associated to at least one of these name prefixes and to each full content item name of a recently requested content item associated to at least one of these name prefixes.

For instance, if the (full) chunk name of a content item is "/bell_labs/video/talks.avi/chunk1", then the full content item name of this content is "/bell_labs/video/talks.avi" and name prefixes of this content item may be "/bell_labs/video" or "/bell_labs" or else "/".

The device according to the invention may include additional characteristics considered separately or combined, and notably:
- its building means may be arranged for building the forwarding information data structure from information provided by routing protocols;
- its building means may be arranged for building a temporary forwarding information data structure that is bounded in size;
   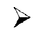 its building means may be arranged, when a new full content item name must be added to the temporary forwarding information data structure and when the latter is full, for removing a full content item name of a chosen one of the recently requested content items from the temporary forwarding information data structure;
- the chosen detailed forwarding information may comprise an interface identifier and a quality metric representing an average chunk retrieval time and/or an average hop distance between the node and chunks of the requested content item;
- its building means may be arranged for managing the temporary forwarding information data structure as a cache by means of a cache replacement policy;
- in variant or in a combination, its building means may be arranged for building the temporary forwarding information data structure as a hash table;
   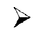 its building means may be arranged for building said hash table as a fixed size non-chained hash-table, in which each full content item name is hashed into a hash value and stored, along with chosen detailed forwarding information, in a bucket corresponding to its hash value modulo a number of buckets of the hash table;
   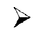 its building means may be arranged for building the hash table as a chained hash-table, in which each full content item name is hashed into a hash value and stored, along with chosen detailed forwarding information, in a bucket corresponding to its hash value modulo a number of buckets of the hash table;
   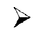 the two aforementioned hash-table designs can be optimized with multiple hash functions used to identify potential buckets, and where the full content item name along with chosen detailed forwarding information is inserted in the least loaded one;
   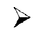 its building means may be arranged for building the hash table by using a d-left hashing design, in which d-hash tables are used indexed with different hash functions;
- its building means may be arranged for storing the temporary forwarding information data structure in a memory chip of its node having a type chosen from a group comprising at least a SRAM, a RLDRAM and a DRAM.

The invention also provides a communication equipment, intended for defining a node of a content centric networking comprising servers storing permanent replicas of content items associated to name prefixes, and comprising a device such as the one above introduced.

The invention also provides a method, intended for organizing forwarding information into nodes of a content centric networking comprising servers storing permanent replicas of content items associated to name prefixes, and comprising a step during which:
- one builds into each node a forwarding information data structure comprising for each name prefix a list of interfaces where a received packet of a content request can be forwarded towards servers, and
- a temporary forwarding information data structure comprising chosen detailed forwarding information associated to each full content item name of a currently requested content item associated to at least one of these name prefixes and to each full content item name of a recently requested content item associated to at least one of these name prefixes.

The invention also provides a computer program product comprising a set of instructions arranged for performing a method such as the one above introduced to allow organization of forwarding information into nodes of a content centric networking comprising servers storing permanent replicas of content items associated to name prefixes.

### Brief description of the figures

Other features and advantages of the invention will become apparent on examining the detailed specifications hereafter and the appended drawings, wherein:
- figure 1 schematically and functionally illustrates a content centric networking comprising four CCN nodes, each equipped with a device according to the invention, and three content servers,
- figure 2 schematically illustrates an example of arrangement of a forwarding information data structure built by a device according to the invention,
- figure 3 schematically illustrates an example of arrangement of a temporary forwarding information data structure built by a device according to the invention,
- figure 4 schematically illustrates an example of procedure than can be implemented by a CCN node upon reception of an interest packet, and
- figure 5 schematically illustrates an example of procedure than can be implemented by a CCN node upon reception of a data packet.

### Detailed description of the preferred embodiment

The appended drawings may serve not only to complete the invention, but also to contribute to its understanding, if need be.

The invention aims, notably, at offering a method, and an associated device D intended for organizing forwarding information into nodes Nj of a content centric networking (or CCN).

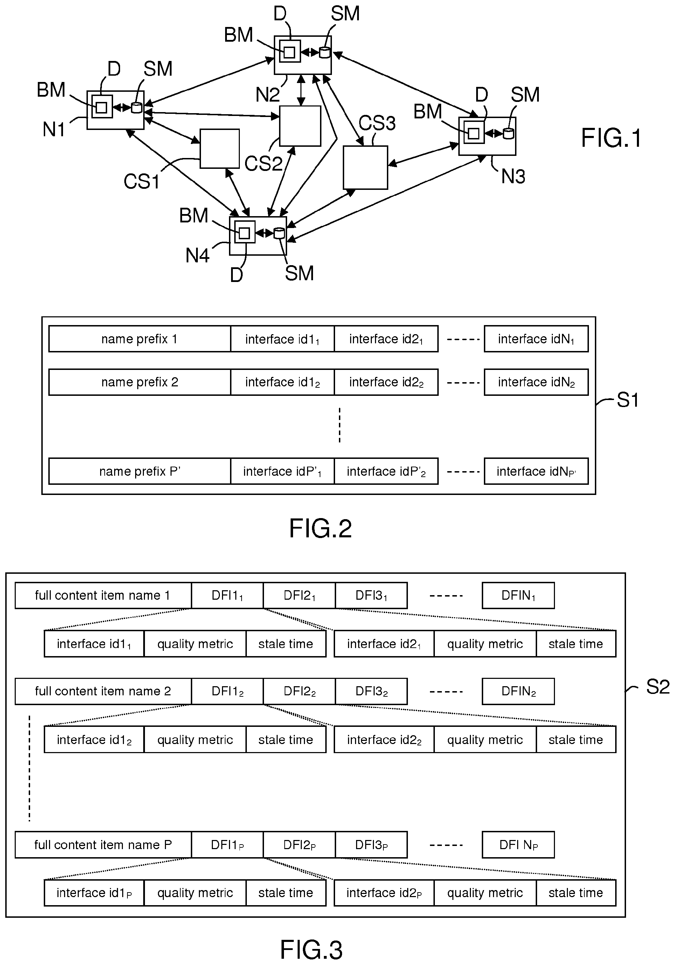

A simplified example of content centric networking (or CCN) is illustrated in figure 1. In this example, the CCN comprises four communication equipments Nj (j = 1 to 4), each defining a CCN node connected to at least one other CCN node Nj' (j' ≠ j), and three content servers CSk (k = 1 to 3), each coupled to at least one CCN node Nj and storing permanent replicas of content items associated to name prefixes.

It is important to note that CCN nodes Nj may temporary store content replicas.

It is also important to note that a CCN may comprise any number of CCN nodes Nj as soon as this number is greater than or equal to two, and any number of content servers CSk as soon as this number is greater than or equal to one.

As mentioned above, the invention notably proposes a device D intended for organizing forwarding information into a CCN node Nj. As illustrated in figure 1, each CCN node Nj comprises a device D which may be made of software modules (and in this case it constitutes a computer program product comprising a set of instructions arranged for performing the method (described below) when it is executed by processing means).But this is not mandatory. Indeed, it may be made of a combination of electronic circuit(s) (or hardware module(s)) and software modules.

This device D comprises at least a building means (or module) BM arranged for building into its node Nj a forwarding information data structure S1 and an associated temporary forwarding information data structure S2.

The forwarding information data structure S1 comprises for each name prefix (referenced by index p' = 1 to P') a list of interfaces (designated by an identifier idn, with n = 1 to Nₚ) where a received packet of a content request can be forwarded towards content servers CSk (comprising a permanent replica of the requested content).

A content request is a request that is sent by a communication equipment into the CCN and that is intended for requesting chunks of content items.

The above mentioned interfaces are interfaces of the considered CCN node Nj that interconnect nodes Nj among themselves and towards the content servers CSk. A node Nj does not send a content request to a content server CSk directly but to the next node Nj' towards this content server CSk. In order to do so, it uses the interface that interconnects itself (Nj) and the selected next node (Nj').

A non-limiting example of arrangement of a forwarding information data structure S1 built by a device D is illustrated in figure 2. In this example, the forwarding information data structure S1 comprises P' name prefixes,each associated to only a list of interfaces id1 to idN_{P'}, but not with information about the quality or status of the interfaces idn.

The building means BM is preferably arranged for building the forwarding information data structure S1 from information that is provided by routing protocols.

As will be explained below a forwarding information data structure S1 is not updated during a chunk retrieval process. Indeed, when a chunk is received there is no process performed on the forwarding information data structure S1. On the contrary, the detailed information contained in the temporary forwarding information data structure S2 corresponding to the requested content item is updated. For instance, the average chunk retrieval time is updated.

The temporary forwarding information data structure S2 comprises chosen detailed forwarding information DFIn associated to each full content item name of a content item that is currently requested and that is associated to at least one of the name prefixes stored in the forwarding information data structure S1, and to each full content item name of a content item that has been recently requested and that is associated to at least one of the name prefixes stored in the forwarding information data structure S1.

It is important to note that the temporary forwarding information data structure S2 is indexed using the full content item name indexes (e.g. /bell_labs/video/talks.avi).

As illustrated in the non-limiting example of figure 1, the building means BM is arranged for storing the forwarding information data structure S1 and the temporary forwarding information data structure S2 in a storing means SM of its node Nj. For instance, the part of this storing means SM that stores the temporary forwarding information data structure S2 may be a memory chip of a SRAM type, or RLDRAM type, or else DRAM type, to allow fast lookup operation and an implementation in high-speed network communication equipments Nj.

Preferably, the building means BM is arranged for building a temporary forwarding information data structure S2 that is bounded in size.

In the case where the temporary forwarding information data structure S2 is bounded in size, the building means BM is preferably arranged, when a new full content item name (i.e. a new entry) must be added to this temporary forwarding information data structure S2 and when the latter (S2) is full, for removing a full content item name of a chosen one of the recently requested content items or of a chosen one of the currently requested content items. The choice depends on a specific criterion defined by the replacement policy.

This allows storing information at the content item granularity and reducing the state to be maintained in a CCN node Nj to content items currently retrieved or that have recently been requested.

The chosen detailed forwarding information may comprise an interface identifier idn and a quality metric representing an average chunk retrieval time(or RTT) on this interface and/or an average hop distance between the node Nj and chunks of the requested content item. It may also comprise a stale time field, and/or other fields (and notably those used for quality of service (or QoS)).

A non-limiting example of arrangement of a temporary forwarding information data structure S2 built by a device D is illustrated in figure 3. In this example, the temporary forwarding information data structure S2 comprises P full content item names, each associated to Nₚ groups of chosen detailed forwarding information DFIn, here comprising an interface identifier idn, a quality metric and a stale time field.

In a first example of embodiment, the building means BM may be arranged for managing the temporary forwarding information data structure S2 as a cache by means of a cache replacement policy. For instance, it may use a traditional cache replacement policy such as Least Recently Used (or LRU) or Random.

In a second example of embodiment, which can be used in combination with the first embodiment, the building means BM may be arranged for building the temporary forwarding information data structure S2 as a hash table. In this case, the hash table can be implemented by the building means BM as a fixed size non-chained hash-table (as proposed by indexing scheme used for high speed caching). Each full content item name is hashed into a hash value whose first H-bits are stored, along with chosen detailed forwarding information DFIn (for instance an interface identifier idn, a quality metric and a stale time field), in the bucket corresponding to the hash value modulo the number of buckets. It is recalled that buckets are the addressable elements of a hash table. In order to reduce collisions a bucket can store multiple entries, or multiple hash functions can be employed.

In a variant, the building means BM may be arranged for building the hash table S2 as a chained hash-table, in which each full content item name is hashed into a hash value and stored, along with chosen detailed forwarding information, in a bucket corresponding to its hash value modulo a number of buckets of the hash table. In the case where collisions occur (i.e. multiple hash values which map to the same bucket), they may be solved using a list of elements per bucket.

It is important to note that the two aforementioned hash-table designs can be optimized with multiple hash functions used to identify potential buckets, and where the full content item name along with chosen detailed forwarding information is inserted in the least loaded one. This allows reducing the load per bucket.

In another variant, the building means BM may be arranged for building the hash table S2 by using a d-left hashing design, in which d-hash tables are used indexed with different hash functions. The full content item name along with chosen detailed forwarding information is inserted in the table with the least loaded bucket with ties broken to the left. This allows to further reduce the load per bucket.

It is important to note that the smaller the load per bucket is the faster the lookup is.

Due to the existence of associated forwarding information data structure S1 and temporary forwarding information data structure S2, the procedures that must be carried out in a CCN node Nj upon reception of interest packets or data packets representing a content request must be modified.

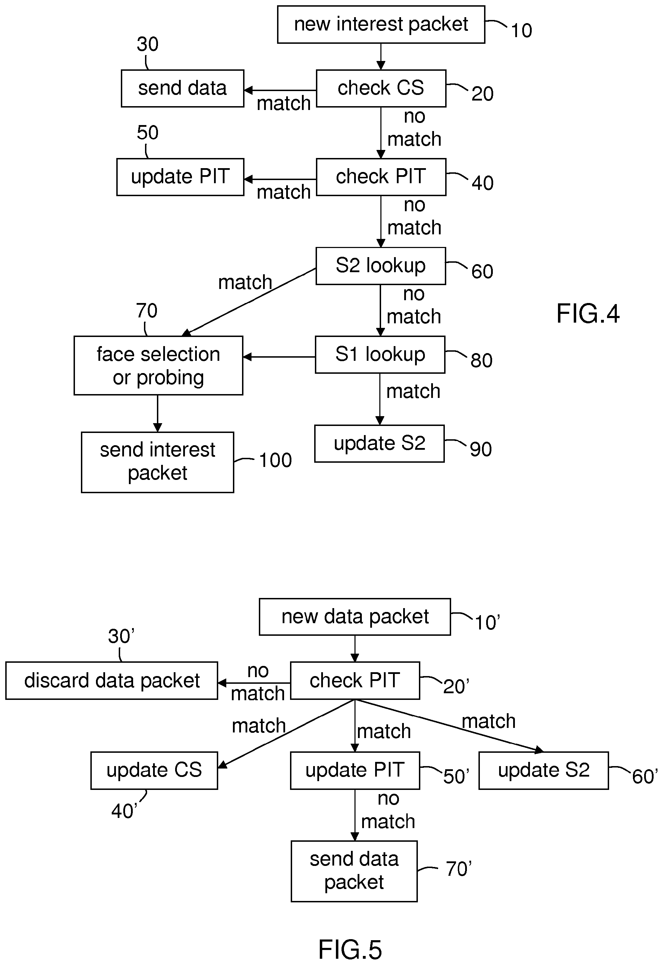

A non-limiting example of procedure that can be implemented by a CCN node Nj upon reception of an interest packet is illustrated in figure 4.

The procedure starts in a step 10 when an interest packet is received by a CCN node Nj. Then in a step 20 the CCN node Nj checks for content availability in its content store (or CS). If this content is available ("match") in the CCN node Nj, its CS sends the requested data back on the incoming interface in a step 30. Otherwise ("no match"), in a step 40 the CCN node Nj checks in a pending interest table (or PIT) whether this content has been already requested upward. If an entry is found in the PIT, it is updated in a step 50 in order to track that the incoming interface is waiting for this content. If no PIT entry is found, an exact match lookup is performed in a step 60 in the temporary forwarding information data structure S2. For this lookup the content item name contained into the incoming interest packet is used (i.e. B-1 components of the interest content item name). If a matching entry is found, detailed forwarding information is extracted from the temporary forwarding information data structure S2in a step 70, and then used to forward the interest packet in a step 100. If no matching entry is found, a longest prefix match lookup is performed on the forwarding information data structure S1 in a step 80. Then the information retrieved from the forwarding information data structure S1 is used to forward the interest packet in step 100. It is important to note that the CCN node Nj can also probe interfaces not specified in the forwarding information data structure S1 in order to discover other available routes. Then in a step 90 the information retrieved from the forwarding information data structure S1 is added to the temporary forwarding information data structure S2 using the received content item name in order to update it (S2) (after this step the detailed forwarding information is initialized in the temporary forwarding information data structure S2 and then updated during following request/chunk exchange for the content item). If the temporary forwarding information data structure S2 is full, a content item name index is removed from the latter (S2).

A non-limiting example of procedure than can be implemented by a CCN node Nj upon reception of a data packet is illustrated in figure 5.

The procedure starts in a step 10' when a data packet is received by a CCN node Nj. Then, in a step 20', the CCN node Nj checks for pending requests in its PIT. If no matching PIT entry is found, the data packet is discarded in a step 30'.If a pending request is found, the data packet is stored in the content store (CS) of the CCN node Nj in a step 40',and forwarded towards all requesting interfaces listed in the PIT in a step 70'. Then, the CCN node Nj updates its PIT in a step 50', and updates information, about the quality (for instance RTT and number of hops) of the interface from which the data packet has been received, into the temporary forwarding information data structure S2, in a step 60'.

The invention can also be considered in terms of a method intended for organizing forwarding information into CCN nodes Nj. Such a method may be implemented by means of a device D such as the one above described with reference to figure 1. Therefore, only its main characteristics will be mentioned hereafter.

The method according to the invention comprises a step during which one (D) builds into each node Nj:
- a forwarding information data structure S1 comprising for each name prefix a list of interfaces where a received packet of a content request can be forwarded towards content servers CSk, and
- a temporary forwarding information data structure S2 comprising chosen detailed forwarding information associated to each full content item name of a currently requested content item associated to at least one of these name prefixes and to each full content item name of a recently requested content item associated to at least one of these name prefixes.

This invention allows implementing dynamic (or adaptive) forwarding algorithms in CCN nodes (even of the high-speed type), and therefore can provide significant benefits in terms of end-user performance and network cost.

The invention is not limited to the embodiments of method, device and communication equipment described above, only as examples, but it encompasses all alternative embodiments which may be considered by one skilled in the art within the scope of the claims hereafter.

## Claims

1. Device (D) for organizing forwarding information into a node (Nj) of a content centric networking comprising servers (CSk) storing permanent replicas of content items associated to name prefixes, said device (D) comprising a building means (BM) arranged for building into said node (Nj) a forwarding information data structure (S1), comprising for each name prefix a list of interfaces where a received packet of a content request can be forwarded towards servers (CSk), and a temporary forwarding information data structure (S2), comprising chosen detailed forwarding information associated to each full content item name of a currently requested content item associated to at least one of said name prefixes and to each full content item name of a recently requested content item associated to at least one of said name prefixes.

2. Device according to claim 1, wherein said building means (BM) is arranged for building said forwarding information data structure (S1) from information provided by routing protocols.

3. Device according to one of claims 1 and 2, wherein said building means (BM) is arranged for building a temporary forwarding information data structure (S2) bounded in size.

4. Device according to claim 3, wherein said building means (BM) is arranged, when a new full content item name must be added to said temporary forwarding information data structure (S2) and when the latter (S2) is full, for removing a full content item name of a chosen one of said recently requested content items from said temporary forwarding information data structure (S2).

5. Device according to one of claims 1 to 4, wherein said chosen detailed forwarding information comprises an interface identifier and a quality metric representing an average chunk retrieval time and/or an average hop distance between a node (Nj) and chunks of the requested content item.

6. Device according to one of claims 1 to 5, wherein said building means (BM) is arranged for managing said temporary forwarding information data structure (S2) as a cache, by means of a cache replacement policy.

7. Device according to one of claims 1 to 6, wherein said building means (BM) is arranged for building said temporary forwarding information data structure (S2) as a hash table.

8. Device according to claim 7, wherein said building means (BM) is arranged for building said hash table (S2) as a fixed size non-chained hash-table, in which each full content item name is hashed into a hash value and stored, along with chosen detailed forwarding information, in a bucket corresponding to its hash value modulo a number of buckets of said hash table.

9. Device according to claim 7, wherein said building means (BM) is arranged for building said hash table (S2) its building means may be arranged for building said hash table as a chained hash-table, in which each full content item name is hashed into a hash value and stored, along with chosen detailed forwarding information, in a bucket corresponding to its hash value modulo a number of buckets of the hash table.

10. Device according to one of claims 8 and 9, wherein said building means (BM) is arranged for building said hash table (S2) with multiple hash functions used to identify potential buckets, and where the full content item name along with chosen detailed forwarding information is inserted in the least loaded one.

11. Device according to claim 7, wherein said building means (BM) is arranged for building said hash table (S2) by using a d-left hashing design, in which d-hash tables are used indexed with different hash functions.

12. Device according to one of claims 1 to 11, wherein said building means (BM) is arranged for storing said temporary forwarding information data structure (S2) in a memory chip of said node (Nj) having a type chosen from a group comprising at least a SRAM, a RLDRAM and a DRAM.

13. Method for organizing forwarding information into nodes (Nj) of a content centric networking comprising servers (CSk) storing permanent replicas of content items associated to name prefixes, said method comprising a step of building into each node (Nj) a forwarding information data structure (S1), comprising for each name prefix a list of interfaces where a received packet of a content request can be forwarded towards servers (CSk), and a temporary forwarding information data structure (S2), comprising chosen detailed forwarding information associated to each full content item name of a currently requested content item associated to at least one of said name prefixes and to each full content item name of a recently requested content item associated to at least one of said name prefixes.

14. Computer program product comprising a set of instructions arranged for performing the method according to claim 13 to allow organization of forwarding information into nodes (Nj) of a content centric networking comprising servers (CSk) storing permanent replicas of content items associated to name prefixes.

## Patentansprüche

1. Vorrichtung (D) zur Organisation der Weiterleitungsinformationen in einen Knoten (Nj) eines inhaltszentrierten Netzwerkbetriebs, umfassend Server (CSk), die permanente Replikate von Contentelementen speichern, die Namenspräfixen zugeordnet sind, wobei die Vorrichtung (D) ein Konstruktionsmittel (BM) umfasst, das eingerichtet ist, um in dem Knoten (Nj) eine Weiterleitungsinformations-Datenstruktur (S1) zu konstruieren, umfassend für jeden Namenspräfix eine Liste von Schnittstellen, wo ein empfangenes Paket einer Contentanfrage zu Servern (CSk) weitergeleitet werden kann, und eine temporäre Weiterleitungsinformations-Datenstruktur (S2), umfassend ausgewählte detaillierte Weiterleitungsinformationen, die jedem Vollcontent-Elementnamen eines aktuell angeforderten Content-Elements zugeordnet sind, das mindestens einem der Namenspräfixe und jedem Vollcontent-Elementnamen eines kürzlich angeforderten Content-Elements zugeordnet ist, das mindestens einem der Namenspräfixe zugeordnet ist.

2. Vorrichtung nach Anspruch 1, wobei das Konstruktionsmittel (BM) eingerichtet ist, um die Weiterleitungsinformations-Datenstruktur (S1) aus Informationen zu konstruieren, die von Routingprotokollen bereitgestellt werden.

3. Vorrichtung nach einem der Ansprüche 1 und 2, wobei das Konstruktionsmittel (BM) eingerichtet ist, um eine temporäre Weiterleitungsinformations-Datenstruktur (S2) begrenzter Größe zu konstruieren.

4. Vorrichtung nach Anspruch 3, wobei das Konstruktionsmittel (BM), wenn der temporären Weiterleitungsinformations-Datenstruktur (S2) ein neuer Vollcontent-Elementname hinzugefügt werden muss und wenn diese (S2) voll ist, eingerichtet ist, um einen Vollcontent-Elementnamen eines ausgewählten Elementes aus den Contentelementen zu entfernen, die kürzlich von der temporären Weiterleitungsinformations-Datenstruktur (S2) angefordert wurden.

5. Vorrichtung nach einem der Ansprüche 1 bis 4, wobei die ausgewählten detaillierten Weiterleitungsinformationen eine Schnittstellenkennung und eine Qualitätsmessung umfassen, darstellend eine durchschnittliche Blockabrufzeit und/oder eine durchschnittliche Hop-Distanz zwischen einem Knoten (Nj) und Paketen des angeforderten Content-Elements.

6. Vorrichtung nach einem der Ansprüche 1 bis 5, wobei das Konstruktionsmittel (BM) eingerichtet ist, um die temporäre Weiterleitungsinformations-Datenstruktur (S2) mittels einer Cache-Ersetzungsrichtlinie als Cache-Speicher zu verwalten.

7. Vorrichtung nach einem der Ansprüche 1 bis 6, wobei das Konstruktionsmittel (BM) eingerichtet ist, um die Weiterleitungsinformations-Datenstruktur (S2) als Hash-Tabelle zu konstruieren.

8. Vorrichtung nach Anspruch 7, wobei das Konstruktionsmittel (BM) eingerichtet ist, um die Hash-Tabelle (S2) als nicht verkettete Hash-Tabelle mit fester Größe zu konstruieren, in welcher jeder Vollcontent-Elementname in einen Hash-Wert gehashed und mit ausgewählten detaillierten Weiterleitungsinformationen in einem Bucket gespeichert ist, das mit seinem Modulo-Hash-Wert einer Anzahl von Buckets der Hash-Tabelle entspricht.

9. Vorrichtung nach Anspruch 7, wobei das Konstruktionsmittel (BM) eingerichtet ist, um die Hash-Tabelle (S2) zu konstruieren, wobei sein Konstruktionsmittel eingerichtet sein kann, um die Hash-Tabelle als verkettete Hash-Tabelle zu konstruieren, in welcher jeder Vollcontent-Elementname in einen Hash-Wert gehached und mit ausgewählten detaillierten Weiterleitungsinformationen in einem Bucket gespeichert ist, das mit seinem Modulo-Hash-Wert einer Anzahl von Buckets der Hash-Tabelle entspricht.

10. Vorrichtung nach einem der Ansprüche 8 und 9, wobei das Konstruktionsmittel (BM) eingerichtet ist, um die Hash-Tabelle (S2) mit multiplen Hach-Funktionen zu konstruieren, die verwendet werden, um potentielle Buckets zu identifizieren, und wo der Vollcontent-Elementname mit ausgewählten detaillierten Weiterleitungsinformationen in das am wenigsten gefüllte Bucket integriert wird.

11. Vorrichtung nach Anspruch 7, wobei das Konstruktionsmittel (BM) eingerichtet ist, um die Hash-Tabelle (S2) unter Verwendung eines d-left-Hash-Designs zu konstruieren, wobei mit verschiedenen Hash-Funktionen indexierte d-Hash-Tabellen verwendet werden.

12. Vorrichtung nach einem der Ansprüche 1 bis 11, wobei das Konstruktionsmittel (BM) eingerichtet ist, um die temporäre Weiterleitungsinformations-Datenstruktur (S2) in einem Speicherchip des Knotens (Nj) eines Typs zu speichern, der aus einer Gruppe ausgewählt ist, die mindestens einen SRAM, einen RLDRAM und einen DRAM umfasst.

13. Verfahren zur Organisation der Weiterleitungsinformationen in Knoten (Nj) eines inhaltszentrierten Netzwerkbetriebs, umfassend Server (CSk), die permanente Replikate von Contentelementen speichern, die Namenspräfixen zugeordnet sind, wobei das Verfahren in jedem Knoten (Nj) einen Konstruktionsschritt einer Weiterleitungsinformations-Datenstruktur (S1) umfasst, umfassend für jeden Namenspräfix eine Liste von Schnittstellen, wo ein empfangenes Paket einer Contentanfrage zu Servern (CSk) weitergeleitet werden kann, und eine temporäre Weiterleitungsinformations-Datenstruktur (S2), umfassend ausgewählte detaillierte Weiterleitungsinformationen, die jedem Vollcontent-Elementnamen eines aktuell angeforderten Content-Elements zugeordnet sind, das mindestens einem der Namenspräfixe und jedem Vollcontent-Elementnamen eines kürzlich angeforderten Content-Elements zugeordnet ist, das mindestens einem der Namenspräfixe zugeordnet ist

14. Rechnerprogrammprodukt, umfassend eine Einheit von Befehlen, die eingerichtet sind, um das Verfahren nach Anspruch 13 durchzuführen, um die Organisation der Weiterleitungsinformationen in Knoten (Nj) eines inhaltszentrierten Netzwerkbetriebs zu erlauben, umfassend Server (CSk), die permanente Replikate von Contentelementen speichern, die Namenspräfixen zugeordnet sind.

## Revendications

1. Dispositif (D) pour organiser des informations de réacheminement dans un noeud (Nj) d'un réseautage centré sur du contenu comprenant des serveurs (CSk) stockant des reproductions permanentes d'éléments de contenu associés à des préfixes de nom, ledit dispositif (D) comprenant un moyen de construction (BM) conçu pour construire dans ledit noeud (Nj) une structure de données d'informations de réacheminement (S1), comprenant pour chaque préfixe de nom une liste d'interfaces où un paquet reçu d'une demande de contenu peut être réacheminé vers des serveurs (CSk), et une structure de données d'informations de réacheminement temporaire (S2), comprenant des informations de réacheminement détaillées choisies associées à chaque nom d'élément de contenu complet d'un élément de contenu actuellement demandé associé à au moins l'un desdits préfixes de nom et à chaque nom d'élément de contenu complet d'un élément de contenu récemment demandé associé à au moins l'un desdits préfixes de nom.

2. Dispositif selon la revendication 1, dans lequel ledit moyen de construction (BM) est conçu pour construire ladite structure de données d'informations de réacheminement (S1) à partir d'informations fournies par des protocoles d'acheminement.

3. Dispositif selon l'une des revendications 1 et 2, dans lequel ledit moyen de construction (BM) est conçu pour construire une structure de données d'informations de réacheminement temporaire (S2) de taille limitée.

4. Dispositif selon la revendication 3, dans lequel ledit moyen de construction (BM) est conçu, lorsqu'un nouveau nom d'élément de contenu complet doit être ajouté à ladite structure de données d'informations de réacheminement temporaire (S2) et lorsque cette dernière (S2) est complète, pour enlever un nom d'élément de contenu complet d'un élément choisi desdits éléments de contenu récemment demandés de ladite structure de données d'informations de réacheminement temporaire (S2).

5. Dispositif selon l'une des revendications 1 à 4, dans lequel lesdites informations de réacheminement détaillées choisies comprennent un identifiant d'interface et une mesure de qualité représentant un temps de récupération moyen de fragment et/ou une distance de saut moyenne entre un noeud (Nj) et des fragments de l'élément de contenu demandé.

6. Dispositif selon l'une des revendications 1 à 5, dans lequel ledit moyen de construction (BM) est conçu pour gérer ladite structure de données d'informations de réacheminement temporaire (S2) en tant que mémoire cache, au moyen d'une règle de remplacement de mémoire cache.

7. Dispositif selon l'une des revendications 1 à 6, dans lequel ledit moyen de construction (BM) est conçu pour construire ladite structure de données d'informations de réacheminement temporaire (S2) en tant que table de hachage.

8. Dispositif selon la revendication 7, dans lequel ledit moyen de construction (BM) est conçu pour construire ladite table de hachage (S2) en tant que table de hachage non chaînée de taille fixe, dans laquelle chaque nom d'élément de contenu complet est haché en une valeur de hachage et stocké, avec des informations de réacheminement détaillées choisies, dans un compartiment correspondant à sa valeur de hachage modulo un nombre de compartiments de ladite table de hachage.

9. Dispositif selon la revendication 7, dans lequel ledit moyen de construction (BM) est conçu pour construire ladite table de hachage (S2), son moyen de construction peut être conçu pour construire ladite table de hachage en tant que table de hachage chaînée, dans laquelle chaque nom d'élément de contenu complet est haché en une valeur de hachage et stocké, avec des informations de réacheminement détaillées choisies, dans un compartiment correspondant à sa valeur de hachage modulo un nombre de compartiments de la table de hachage.

10. Dispositif selon l'une des revendications 8 et 9, dans lequel ledit moyen de construction (BM) est conçu pour construire ladite table de hachage (S2) avec de multiples fonctions de hachage utilisées pour identifier des compartiments potentiels, et où le nom d'élément de contenu complet avec des informations de réacheminement détaillées choisies est inséré dans le compartiment le moins chargé.

11. Dispositif selon la revendication 7, dans lequel ledit moyen de construction (BM) est conçu pour construire ladite table de hachage (S2) en utilisant un plan de hachage « d-left », dans lequel des tables de hachage « d-hash tables » sont utilisées indexées avec des fonctions de hachage différentes.

12. Dispositif selon l'une des revendications 1 à 11, dans lequel ledit moyen de construction (BM) est conçu pour stocker ladite structure de données d'informations de réacheminement temporaire (S2) dans une puce mémoire dudit noeud (Nj) ayant un type choisi dans un groupe comprenant au moins une mémoire vive statique SRAM, une mémoire vive dynamique à latence réduite RLDRAM et une mémoire vive dynamique DRAM.

13. Procédé pour organiser des informations de réacheminement dans des noeuds (Nj) d'un réseautage centré sur ducontenu comprenant des serveurs (CSk) stockant des reproductions permanentes d'éléments de contenu associés à des préfixes de nom, ledit procédé comprenant une étape de construction dans chaque noeud (Nj) d'une structure de données d'informations de réacheminement (S1), comprenant pour chaque préfixe de nom une liste d'interfaces où un paquet reçu d'une demande de contenu peut être réacheminé vers des serveurs (CSk), et d'une structure de données d'informations de réacheminement temporaire (S2), comprenant des informations de réacheminement détaillées choisies associées à chaque nom d'élément de contenu complet d'un élément de contenu actuellement demandé associé à au moins l'un desdits préfixes de nom et à chaque nom d'élément de contenu complet d'un élément de contenu récemment demandé associé à au moins l'un desdits préfixes de nom.

14. Produit programme d'ordinateur comprenant un ensemble d'instructions conçu pour réaliser le procédé selon la revendication 13 pour permettre l'organisation d'informations de réacheminement dans des noeuds (Nj) d'un réseautage centré sur du contenu comprenant des serveurs (CSk) stockant des reproductions permanentes d'éléments de contenu associées à des préfixes de nom.
